# EUROPÄISCHE PATENTSCHRIFT

(11) **EP 0 473 941 B1**
(45) Veröffentlichungstag und Bekanntmachung des Hinweises auf die Patenterteilung: **27.10.1993**
(21) Anmeldenummer: 91112846.0
(22) Anmeldetag: 31.07.1991
(51) Int. Cl.: B65G 53/16, B65G 53/22

(54) **Verfahren zum Fördern von sauerstoffempfindlichem, pulvrigem oder körnigem Schüttgut und Vorrichtung zur Durchführung des Verfahrens**
Method for conveying oxygen sensitive, powdered or grained bulk material and means for that
Procédé pour transporter des matériaux en poudre ou en grain sensibles à l'oxygène et dispositif pour la réalisation du procédé

(30) Priorität: 05.09.1990 DE 4028098
(43) Veröffentlichungstag der Anmeldung: 11.03.1992
(73) Patentinhaber: Bühler GmbH, D-38114 Braunschweig (DE)
(72) Erfinder: Schmieta, Heinrich, Dipl.-Ing., W-3300 Braunschweig (DE)
(74) Vertreter: Révy von Belvárd, Peter

(56) Entgegenhaltungen:
- DE-A- 2 434 526
- DE-A- 3 145 668
- DE-A- 3 508 132
- DE-A- 4 007 430
- US-A- 4 067 623
- US-A- 4 226 371
- PATENT ABSTRACTS OF JAPAN, unexamined applications, M field, Band 8, Nr. 9, 14. Jan. 1984 THE PATENT OFFICE JAPANESE GOVERNMENT Seite 76 M 268

## Beschreibung

Die Erfindung bezieht sich auf ein Verfahren zum Fördern sauerstoffempfindlicher Güter, insbesondere von Kunststoffgranulat nach dem Oberbegriff des Anspruches 1, und auf eine Vorrichtung zur Durchführung des Verfahrens.

Ein derartiges Verfahren ist aus dem US-Patent 4,067,623 bekannt. Darin wird das Schüttgut unter Zuhilfenahme von zwei Druckbehältern in die Transportleistung eingespeist, doch geht es hier nicht um sauerstoffempfindliche Güter, vielmehr wird zum Transport durchwegs Luft benutzt. Das Problem bei sauerstoffempfindlichen Gütern besteht darin, dass diese nicht immer von Anfang an dem Sauerstoff ferngehalten werden können. Es ergibt sich dann das Problem, wie und ab welcher Stelle das Gut vor der Beaufschlagung mit Sauerstoff geschützt werden kann.

Zum pneumatischen Fördern bedient man sich entweder der sog. Flugförderung mit relativ hohen Luftgeschwindigkeiten oder der Pfropfenförderung. Für das schonende Fördern empfindlichen Gütern wird häufig ein Pfropfenfördersystem verwendet. Derlei Systeme können prinzipiell in zwei Gruppen unterteilt werden, nämlich solche, bei denen ein Luftpolster zwischen den einzelnen fortzubewegenden Materialpfropfen in einer Leitung durch eine Nebenschlussleitung gebildet wird, von der aus Blasdüsen in Abständen immer wieder in die Materialförderleitung einmünden, oder solche Systeme, bei denen die Gaspolster zwischen den einzelnen Pfropfen durch taktweise betriebene Ventile an einer mit der Materialförderleitung verbundenen Sendestation gebildet werden.

Ein besonders vorteilhaftes Verfahren ist aus der DE-A-40 07 430 bekannt, deren Inhalt hiermit als geoffenbart gilt. Dabei werden in Abhängigkeit von der eingespeisten Schüttgutmenge über wenigstens einen Füllstandsensor am Sendegefäss abwechselnd Ventile an pneumatischen Leitungen in das Sendegefäss und in die Förderleitung betätigt.

Gleichgültig, welches System verwendet wird, ist es jedenfalls bei sauerstoffempfindlichen Gütern bekannt, anstelle von Luft ein Inertgas, insbesondere Stickstoff als Fördergas zu verwenden.

Wenn nun das Fördergut aus einer Luftatmosphäre in die Förderleitung gebracht werden soll, so muss die Luft aus der Materialschüttung entfernt werden.

Dazu wurden, wie beispielswiese in der DE-OS 31 36 774, DE-PS 35 08 132, DE-OS 31 45 668, DE-PS 24 34 526 und US-PS 4 226 371 beschrieben, unterschiedliche Vorschläge gemacht, wobei in den meisten Fällen das Inert- bzw. Schutzgas als reines Födermedium dient; demnach wird der (Rest-)Sauerstoff nicht optimal verdrängt.

In der CH-PS 446 786 wird hingegen ein Verfahren beschrieben, bei dem ein Schutzgas im Gegenstrom durch das in einer geschlossenen Förderstrecke strömende Schüttgut hindurchgeführt wird, wobei in eine Zone des Förderkanals Düsen zum Zuführen des Schutzgases münden. Dieser Vorschlag bedeutet zwar eine gewisse Verbesserung der Durchmischung des Schüttgutes mit dem Schutzgas, doch sind die durch die engen Querschnittsverhältnisse möglichen Zufuhrmengen an Schutzgas beschränkt und die relativ kurze Kontaktzeit reicht nicht zur völligen Verdrängung der Luft aus.

In vielen Fällen wird jedoch erwünscht sein, diese Durchmischung mit dem Inertgas einerseits intensiver und/oder über längere Strecken vorzunehmen und anderseits in Abhängigkeit von vorwählbaren Zeiten oder auch vom jeweils gerade erreichten Verhältnis zwischen Inertgas und Sauerstoff die Weiterförderung des Schüttgutes zu stoppen bzw. zu ermöglichen. Zusätzlich soll das Inertgas als Fördermedium für die Pfropfenförderung verwendet werden.

Die Lösung dieser Aufgabenstellung gelingt durch ein Verfahren bzw. eine Vorrichtung mit den im Kennzeichen des Anspruches 1 bzw. 5 beschriebenen Merkmalen. Vorteilhafte Weiterbildungen der Erfindung sind in den Kennzeichen der abhängigen Ansprüche beschrieben.

Wie an sich bekannt, sind zweckmässig, zwei parallel zueinander geschaltete und wechselweise betreibbare Druckbehälter vorgesehen, um somit einen quasi-kontinuierlichen Betrieb zu erreichen, d.h. die beiden Aufgabebehälter werden taktweise derart chargenmässig gefüllt, dass ihre zusammengeschalteten Ausgangsleitungen eine kontinuierliche Förderung ergeben.

Um das Schüttgut gleichmässig gut und intensiv von Inertgas durchspült in die Förderleitung zu transportieren und damit gleiche Umgebungsqualität der geförderten Schüttgutpfropfen zu gewährleisten, wird es vorteilhaft sein, das Schleusenorgan zwischen Aufgabenbehälter und Sendegefäss erst nach einer bestimmten Einwirkzeit des Inertgases in Aufgabebehälter und Speiseleitungen bzw. in Abhängigkeit vom Erreichen eines vorgegebenen Verhältnisses von Inertgas und Sauerstoff zu öffnen. Die Bestimmung dieses Verhältnisses kann dabei am Aufgabebehälter selbst und dann möglichst im oberen Bereich bzw. an der in den Aufgabebehälter führenden Speiseleitung nahe der Einlauföffnung in den Behälter erfolgen.

In gleicher Weise kann damit, nämlich über die Bestimmung des Füllstandes im Aufgabebehälter bzw. über die Bestimmung des Verhältnisses von Inertgas zu Sauerstoff, oder eventuell auch nur in Abhängigkeit vom Oeffnen des Schleusenorgans bzw. in Abhängigkeit von einer vorgegebenen Einwirkzeit des Inertgases - wobei alle diese Werte einer bestimmten Aufgabebehälter-Sendegefäss-Station entsprechen - ein Wegeventil betätigt werden, wodurch Schüttgut in eine andere Aufgabebehälter-Sendegefäss-Station eingespeist wird.

Als Inertgas wird bevorzugt Stickstoff verwendet, doch können in Abhängigkeit von der Natur des zu befördernden Schüttgutes auch andere Inertgase, wie z.B. Argon oder Kohlensäure zur Anwendung gelangen.

Eine Anlage zur Durchführung des Verfahrens weist im Bodenbereiche des Aufgabebehälters in an sich bekannter Weise eine Einrichtung zum Einblasen eines Gases auf, insbesondere eine mit Einblasöffnungen versehene Bodenwandung, die über eine Leitung mit einem Inertgasbehälter in Verbindung steht.

Vorzugsweise ist der Aufgabebehälter einer ein Sendegefäss und eine Förderleitung aufweisenden Sendestation vorgeschaltet, die im Bereich des Sendegefässeinlasses und an der Förderleitung mit je einem wechselweise in Betrieb gesetzten Ventil zur Bildung der Schüttgutpfropfen in Verbindung steht, wobei das Sendegefäss im allgemeinen grösser als das Volumen eines zu bildenden Pfropfens ist. Die Steuerung der Ventile erfolgt dabei vorzugsweise in der Art, wie dies in der DE-A-40 07 430 beschrieben ist.

Für eine optimale Entlüftung des Fördergutes ist die Grösse des Aufgabegefässes unter Umständen kritisch. Einerseits wird die Entlüftung erschwert, je grösser das Aufgabegefäss ist, anderseits sollte der Aufgabebehälter so gross wie möglich sein, um eine gewisse Mindestdurchsatzleistung zu erreichen. Es hat sich dabei ergeben, dass der Durchmesser des Gefässes 1000mm nicht überschreiten sollte, vorzugsweise im Bereiche von 400mm bis 500mm liegt.

Um bei paralleler Anordnung von mehreren Aufgabebehälter-Sendegefäss-Stationen auch während des Beschickens einer anderen Station mit Schüttgut weiterhin das Durchgasen mit Inertgas in einer ersten Aufgabebehälter-Sendegefäss-Station aufrechthalten zu können, wird günstigerweise ein die Beschickung der einzelnen Aufgabebehälter-Sendegefäss-Stationen regelndes Wegeventil so ausgeführt sein, dass es in Sperrstellung gegen die Schüttgutförderrichtung durchlässig für Inertgas ist.

Da für die Durchdringung mit dem Inertgas - wie oben erwähnt - die Einwirkungsdauer von Bedeutung ist, kann die Einwirkungsdauer dadurch verlängert werden, dass das dem Aufgabebehälter zugeführte Stickstoff erst an einem Punkte der dem Aufgabehälter vorgeschalteten Speiseleitung, insbesondere an deren Beginn, entnommen wird. Ferner mag die Einwirkungsdauer auch dadurch bestimmt werden, dass der Aufgabenbehälter wenigstens eine Länge von 1m, insbesondere 2m bis 2,5m besitzt. Bauhöhen über drei Metern werden dann bereits sehr platzaufwendig.

Weitere Einzelheiten der Erfindung ergeben sich anhand der nachfolgenden Beschreibung eines in der Zeichnung schematisch dargestellten Ausführungsbeispieles. Darin zeigt:
- Fig. 1: einen Gesamtplan einer bevorzugten Ausführungsform, von der
- Fig. 2: ein Detail veranschaulicht.

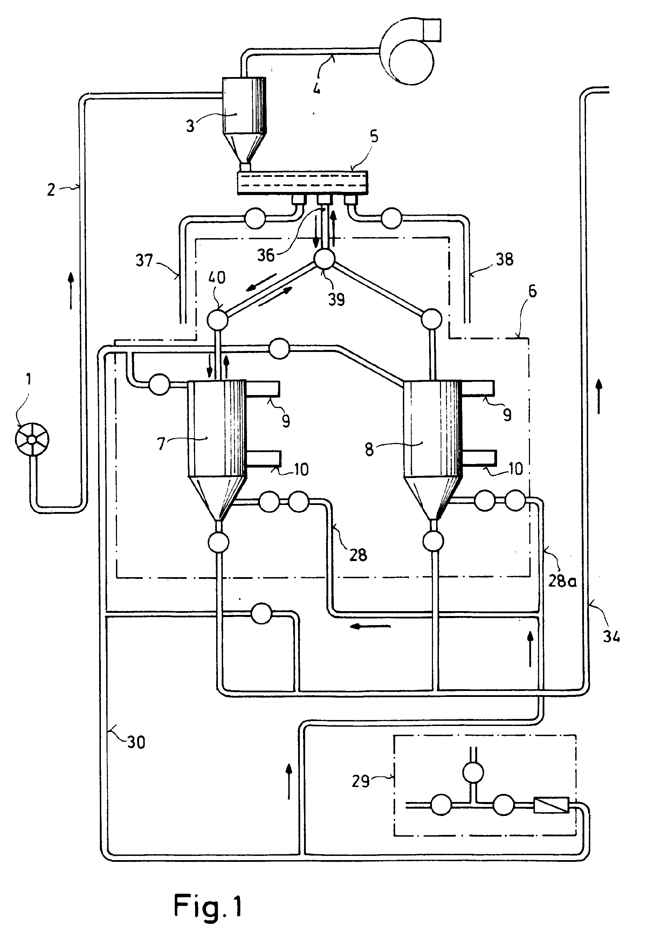

Gemäss Fig. 1 wird ein sauerstoffempfindliches Gut, wie Polyamid-Granulat von einer Zufuhrquelle, insbesondere dem das Granulat erzeugenden Granulator, beispielsweise über eine Zellenradschleuse 1 in eine Speiseleitung 2 eingespeist. Diese Speiseleitung mündet zwecks Befreiung von Leichtteilchen zweckmässig in einen Zyklon 3, dessen Absaugleitung 4 mit einem entsprechenden Gebläse verbunden ist. Anschliessend kann noch ein Siebvorgang in einem Sieb 5 stattfinden, um Agglomerate und allenfalls weitere Feinteile auszuscheiden.

Im Anschluss an das Sieb 5 ist eine Aufgabestation 6 vorgesehen, welche zwei, parallel zueinander geschaltete Aufgabebehälter 7, 8 aufweist. Diese beiden Aufgabenbehälter werden wechselweise über eine Weiche 39 beschickt. Nachfolgend wird nun der Betrieb eines dieser Aufgabebehälter 7 beschrieben, wobei es sich versteht, dass die Betriebsweise für den Behälter 8 analog vor sich geht.

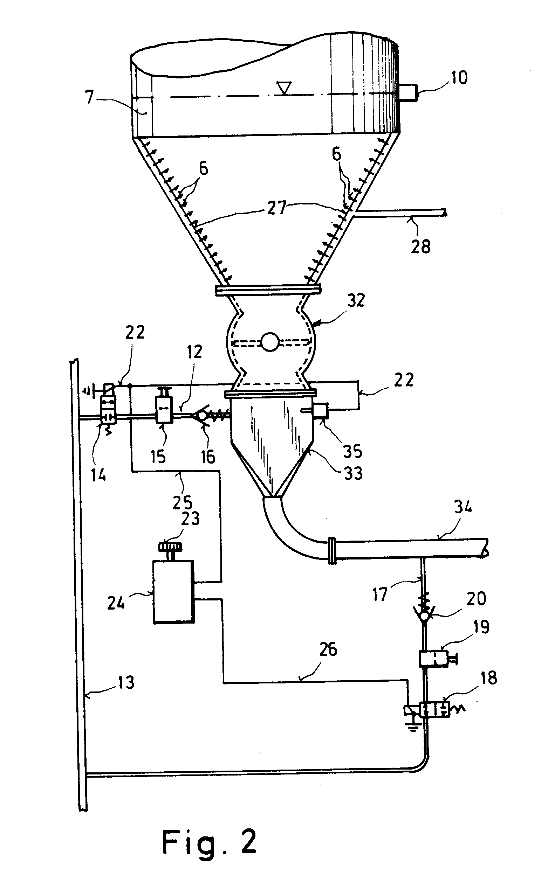

Jeder dieser Behälter ist mit Vollmelder 9 und einem Leermelder 10 ausgestattet. Die Einzelheiten sind der Fig. 2 entnehmbar.

Wie ersichtlich, besitzt jeder Aufgabebehälter 7 bzw. 8 einen Belüftungsboden 27, der sich im kegelförmigen Auslass entlang der Mantelwand des Behälters erstreckt und zusammen mit der Aussenwand des Behälters einen Hohlraum bildet, in den eine Leitung 28 mündet.

Wie Fig. 1 zeigt, ist die Leitung 28, und mit ihr eine zum Behälter 8 führende Leitung 28a an eine Inertgasquelle 29 angeschlossen. Ueber diese Inertgasquelle 29 wird auch der Druck innerhalb der Aufgabegefässe 7, 8 über eine Leitung 30 und zugeordnete Ventile geregelt. Mit Oeffnen des Klappenventils 32 wird auch die Leitung 30 in das Aufgabegefäss über ein Ventil geöffnet, wohingegen - da dann der Spülvorgang beendet ist - die Leitung 28 geschlossen wird, wie weiter unten genauer dargestellt ist. Schliesst das Klappenventil 32, so schliesst ebenfalls die Leitung 30, über die in Inertgas zur Unterstützung des Fördervorgangs in den Aufgabenbehälter eingebracht wird.

Gemäss Fig. 2 ist an der Unterseite des Aufgabebehälters 7 eine Klappenventil 32 vorgesehen, deren Auslass in ein Sendegefäss 33 mündet. Im Bereich des Einlaufs dieses Sendegefässes 33, das im allgemeinen grösser ist als es dem Volumen eines zu bildenden Gutpfropfens entspricht, ist eine von einer gemeinsamen Versorgungsleitung 13 für das Inertgas-Druckmedium abzweigende Druckleitung 12 angeschlossen, die ein Elektromagnetventil 14, ein Feineinstellventil 15, sowie ein Rückschlagventil 16 aufweist. Analog dazu ist der Auslaufseite des Sendegefässes 33 bzw. dem diesem Gefäss 33 zugekehrten Ende einer Förderleitung 34 eine weitere Druckleitung 17 zugeordnet, die wie die Leitung 12 ein Elektromagnetventil 18, ein Feineinstellventil 19 und ein Rückschlagventil 20 aufweist.

An der Einlaufseite des Sendegefässes 33 ist ein Füllstandsensor 35 vorgesehen, der bei Erreichen einer vorbestimmten Füllhöhe innerhalb des Sendegefässes 33 ein Signal an das Ventil 14 abgibt, so dass dieses öffnet. Somit wird das Material im Sendegefäss 33 unter Druck gesetzt und gegen die Förderleitung 34 geschoben.

Gleichzeitig wird das vom Füllstandsensor 35 abgegebene Signal über eine Leitung 25 einem einstellbaren Monoflop 24 zugeführt, der nach Verstreichen einer mit Hilfe eines Einstellknopfes 23 einstellbaren Verweilzeit über eine Leitung 26 ein Signal an das Ventil 18 abgibt. Bei Aenderungen des Förderdurchsatzes braucht also lediglich die Verweilzeit mittels des Knopfes 23 entsprechend eingestellt werden.

In dem Augenblick, in dem das Ventil 18 der Druckleitung 17 zur Förderleitung 34 öffnet, schliesst das Ventil 14 der Druckleitung 12 zum Sendegefäss 33 und wird erst wieder bei Erreichen der vorbestimmten Füllhöhe im Sendegefäss 33 über ein vom Füllstandsensor 35 abgegebenes Signal geöffnet, wobei gleichzeitig das Ventil 18 schliesst. Der Rhythmus des entgegengesetzt stattfindenden Oeffnens und Schliessens der beiden Ventile ist periodisch und nur vom Durchsatz des Schüttgutes abhängig, wobei die Zeitdauer der jeweiligen Offen- und Geschlossenen-Zustände der beiden Ventile unterschiedlich lang sein kann.

Natürlich können die Ventile 14 und 18 auch in herkömmlicher Weise wechselweise, z.B. über eine Steuereinrichtung 24, derart gesteuert werden, dass nach dem Befüllen des Sendegefässes 33 zunächst das Ventil 14 und danach das Ventil 18 geöffnet wird, ohne die Steuerung über den Füllstandsensor 35 vorzusehen.

Aus dem Sendergefäss 33 werden so einzelne, durch Inertgaspolster unterteilte und entlüftete Materialpfropfen in die Leitung 34 abgegeben, die auch aus Fig. 1 ersichtlich ist.

Durch die Erfindung wird erreicht, dass die ohnehin vorzusehende Aufgabestation 6 für die Pfropfenförderung gleichzeitig auch der Entlüftung dient und damit eine gesonderte Entlüftungsstation eingespart wird. Das im Gegenstrom zum durch die Leitung 36 geförderten Gut geführte Inertgas durchströmt zweckmässig diese Leitung 36, die den behälterseitigen Teil der Speiseleitung 2 darstellt. Wenn nun das Inertgas durch diesen Leitungsteil 36 hindurchströmen soll, so muss für eine Zirkulation Sorge getragen werden, was prinzipiell an einem beliebigen Punkte, etwa auch im Bereiche der Weiche 39, geschehen könnte. Um aber die Entlüftungsdauer möglichst zu verlängern, ist es vorteilhaft, diesen Leitungsabschnitt 36 möglichst bis zu dessen Beginn, in diesem Falle bis zum Sieb 5, zu durchlaufen. Vom Sieb 5 kann dann das hier bereits mit der ausgespülten Luft vermischte Gas über eine der Leitungen 37 oder 38 abgezogen und allenfalls nach entsprechender Reinigung wiederverwertet werden.

Wird an dem Speiseleitungsteil 36, möglichst nahe am Aufgabebehälter 7, ein Gasprüfgerät 40 zur Analyse des dort vorhandenen Gasgemisches eingesetzt, so besteht die Möglichkeit, bei Erreichen eines bestimmten Inertgas-Sauerstoff-Verhältnisses einerseits das Klappenventil 32 zu öffnen, eventuell in Abhängigkeit vom gleichzeitigen Erreichen eines bestimmten Füllstandes im Aufgabebehälter 7, was über den Vollmelder 9 gesteuert werden kann, anderseits kann gleichzeitig die Schüttguteinspeisung über die Verstellung des Wegeventils 39 in einen anderen Aufgabebehälter 8 umgelenkt werden. Dieser letztere Vorgang sollte ganz unabhängig von dem im Gasprüfgerät 40 bestimmten Gasmischverhältnis auch allein über den Vollmelder 9 bei Erreichen des Voll-Füllstoffstandes im Aufgabenbehälter 7 vor sich gehen. Das Öffnen des Klappenventils 32 am Aufgabenbehälter 7 hingegen wird erst nach Erreichen des geforderten Wertes für das Inertgas-Sauerstoff-Verhältnis über das Gasprüfgerät 40 gesteuert. Das noch im Aufgabebehälter 7 und Speise-Leitungsabschnitt 36 befindliche Schüttgut wird dazu noch bis zum Erreichen dieses Wertes von Inertgas durchspült; deswegen sollte das Wegeventil 39, obwohl für das Schüttgut in Sperrstellung befindlich, Inertgas entgegen der Förderrichtung des Schüttgutes durchlassen. Anstelle dessen könnte eine Inertgas-Abzugsleitung knapp nach dem Wegeventil 39 - d.h. zwischen letzterem und dem Aufgabebehälter 7 - vorgesehen werden. Diese Abzugsleitung könnte mit Schliessen des Wegeventils 39 geöffnet werden, bei offenem Wegeventil 39 hingegen sollte sie geschlossen sein, um die längere Durchspülstrecke - bis zum Sieb 5 - zur Verfügung zu haben. Da in diesem Fall zwei Aufgabebehälter 7 und 8 gegen die zugehörigen Sendegefässe 33 gesperrt sind, sollte für einen solchen Fall wenigstens noch eine dritte Aufgabebehälter-Sendegefäss-Station vorgesehen sein, um eine kontinuierliche Förderung von Schüttgutpfropfen zu ermöglichen. Als Wegenventil 39 ist dann ein Mehrfachwegeventil einzusetzen.

Ueber den Leermelder 10 wird das Klappenventil 32 wieder geschlossen, der Aufgabebehälter 7 ist für eine neuerliche Aufnahme von Schüttgut verfügbar, was, im oben beschriebener Weise, über die entsprechend gesteuerte Verstellung des Wegeventil-Weiche 39 geschieht. Das Inertgas könnte auch auf andere Weise als oben beschrieben in den Aufgabebehälter eingebracht werden, um eine genügend intensive Durchspülung des Schüttguts zu ermöglichen. So könnte eine Art Gebläse im unteren Bereich des Aufgabebehälters diese Aufgabe übernehmen, oder das Inertgas könnte auch über wenigstens eine in den Aufgabebehälter 7 ragende, mit Auslassöffnungen versehene in der Figur nicht dargestellte Lanze einströmen. Eventuell könnte auch der ganze Aufgabebehälter doppelwandig ausgeführt sein, sodass Inertgas über die gesamte, mit Oeffnungen versehene Innenwandfläche einströmen kann.

Im Rahmen der Erfindung sind zahlreiche Varianten denkbar; so kommt es auf die Art der Weiterbeförderung durch die Leitung 34 an, ob überhaupt eine Schleusenorgan und ein Sendegefäss in der beschriebenen Weise erforderlich ist, welch letztere Teile besonders im Falle einer Pfropfenförderung benötigt werden. Im Falle einer Flugförderung hingegen wird mindestens das Sendegefäss 33, gegebenenfalls auch das Schleusenorgan 32, entfallen.

## Patentansprüche

1. Verfahren zum Fördern von sauerstoffempfindlichem, pulvrigem oder körnigem Schüttgut, insbesondere in Form von Portionen, bei dem das Schüttgut über eine Speiseleitung (2; 36) in einen Aufgabebehälter (7; 8) gespeist und von diesem aus über ein Sendegefäss (33), und gegebenenfalls über ein Schleusenorgan (32), in einer Förderleitung (34) transportiert wird, wobei der Transport des Schüttgutes vom Sendegefäss (33) in die Förderleitung (34) unter Uberdruck mittels Inertgas erfolgt, dadurch gekennzeichnet, dass das Inertgas im Aufgabebehälter (7; 8) und auch in der in den Aufgabebehälter (7; 8) mündenden Speiseleitung (36) das Schüttgut entgegen der Förderrichtung durchströmt, in der Förderleitung (34) hingegen als Transportmittel dient.

2. Verfahren nach Anspruch 1, dadurch gekennzeichnet, dass der Druck in Sendegefäss (33) und Förderleitung (34) in Abhängigkeit vom Erreichen des Füllzustandes des Sendegefässes (33) über wenigstens einen Füllstandsensor (35) gesteuert wird.

3. Verfahren nach Anspruch 1 oder 2, dadurch gekennzeichnet, dass das Schüttgut aus wenigstens zwei zueinander parallel geschalteten Aufgabebehältern (7; 8) und Sendegefässen (33), abwechselnd, quasi-kontinuierlich in eine gemeinsame Förderleitung (34) gefördert wird
und dass vorzugsweise in einem Aufgabebehälter (7; 8) der Füllstand und/oder im Bereich der Speiseleitung (2; 36) das Verhältnis zwischen Inertgas und Sauerstoff bestimmt und in Abhängigkeit von wenigstens einem der so bestimmten Werte eine jeweils anderer Aufgabebehälter (8; 7) beschickt wird.

4. Verfahren nach einem der vorhergehenden Ansprüche, dadurch gekennzeichnet, dass zwischen Aufgabebehälter (7; 8) und Sendegefäss (33) das, vorzugsweise als Klappenventil ausgebildete, Schleusenorgan (32) in Abhängigkeit von einem festgestellten Ereignis betätigt wird, und dass dieses Ereignis wenigstens eines der folgenden ist:
a) die Betätigung des Schleusenorganes erfolgt in Abhängigkeit von einer vorgegebenen Einwirkzeit des Inertgases in Aufgabenbehälter (7; 8) und Speiseleitung (2; 36);
b) die Betätigung des Schleusenorganes erfolgt in Abhängigkeit vom Erreichen des über wenigstens einen Füllstandsensor (9) festgestellten Füllstandes des Aufgabebehälters (7; 8);
c) im Bereich der Speiseleitung (2; 36) wird das Verhältnis zwischen Inertgas und Sauerstoff bestimmt und in Abhängigkeit davon das Schleusenorgan (32) betätigt.

5. Vorrichtung zur Durchführung des Verfahrens nach einem der vorhergehenden Ansprüche, mit wenigstens einem über eine Speiseleitung (2; 36) - und gegebenenfalls ein Wegeventil (39) - gespeisten Aufgabebehälter (7; 8) und wenigstens einem über ein - vorzugsweise als Klappenventil ausgebildetes - Schleusenorgan (32) mit diesem verbundenen Sendegefäss (33), das trichterförmig in eine Förderleitung (34) mündet, wobei aus einer gemeinsamen Inertgasquelle (29) gespeiste, pneumatische Leitungen (30; 28; 12; 20) sowohl in das Sendegefäss (33) als auch in die Förderleitung (34) und den Aufgabebehälter (7; 8) münden und eine Steuerungseinrichtung zum intermittierenden Beaufschlagen des Sendegefässes (33) bzw. der Förderleitung (34) mit dem Inertgas vorgesehen ist, wobei wenigstens eine Inergasförderleitung (28) in den unteren Bereich des Aufgabebehälters (7; 8) einmündet,
dadurch gekennzeichnet, dass die Vorrichtung so gestaltet ist, dass das Inertgas im Aufgabebehälter (7; 8) und auch in der in den Aüfgabebehälter (7; 8) mündenden Speiseleitung (36) das Schüttgut entgegen der Förderrichtung durchströmt, in der Förderleitung (34) hingegen als Transportmittel dient.

6. Vorrichtung nach Anspruch 5, dadurch gekennzeichnet, dass die Steuerungseinrichtung wenigstens einen Füllstandsensor (35) zur Feststellung des Vollfüllstandes des Schüttgutes im Sendegefäss (33) aufweist.

7. Vorrichtung nach Anspruch 5 oder 6, dadurch gekennzeichnet, dass der untere Bereich des Aufgabebehälters (7; 8) trichterförmig und doppelwandig ausgebildet ist, wobei die Inertgasförderleitung (28) in den Hohlraum zwischen den beiden Wänden mündet und die Innenwandung (27) Oeffnungen zum Durchtritt des Inertgases besitzt.

8. Vorrichtung nach einem der Ansprüche 5 bis 7, dadurch gekennzeichnet, dass für die Beschickungsregelung des Aufgabehehälters (7; 8) ein Wegeventil (39) vorgesehen ist, welches gegen die Schüttgutförderrichtung in Sperrstellung für Inertgas durchlässig ist.

9. Vorrichtung nach einem der Ansprüche 5 bis 8, dadurch gekennzeichnet, dass ein Wegeventil (39) vorgesehen ist und dass das Wegeventil (39) und/oder das Schleusenorgan (32) in Abhängigkeit von je einem am Aufgabebehälter (7; 8) vorgesehenen Füllstands- (9) bzw. Leerstandssensor (10) und/oder vom Messwert eines - vorzugsweise zwischen dem Wegeventil (39) und dem Aufgabebehälter (7; 8) vorgesehenen - Inertgas-Sauerstoff-Messgerätes (40) verstellbar ist.

10. Vorrichtung nach einem der Ansprüche 5 bis 9, dadurch gekennzeichnet, dass die Dimensionen des jeweiligen Aufgabebehälters wenigstens einer der folgenden Bedingungen genügt:
a) der Durchmesser des Aufgabebehälters (7; 8) ist nicht grösser als 1000mm und liegt vorzugsweise zwischen 400 und 500mm;
b) die Höhe des Aufgabenbehälters (7; 8) beträgt wenigstens 1m, insbesondere 2m bis 2,5m.

## Claims

1. Method for conveying oxygen-sensitive, powdered or granular loose material, more particularly in the form of portions, whereby the loose material is fed via a feeder line (2; 36) into a feed container (7; 8) and from there transported via a transmitting vessel (33), and if appropriate via a locking element (32), in a conveyor line (34), the loose material being transported from the transmiiting vessel (33) into the conveyor line (34) at excess pressure using inert gas, characterised in that the inert sas in the feed container (7; 8) and also in the feeder line (36) which opens out into the feed container (7; 8) flows through the loose material in the direction opposite the transport direction, whereas in the conveyor line (34) it acts as the transporting agent.

2. Method according to claim 1, characterised in that the pressure in the transmitting vessel (33) and conveyor line (34) is controlled via at least one filling level sensor (35) in response to the filling level reached in the transmitting vessel (33).

3. Method according to claim 1 or 2, characterised in that the loose material is alternately and quasi-continuously conveyed from at least two parallel feed containers (7; 8) and transmitting vessels (33) into a common conveyor line (34)
and that preferably in one feed container (7; 8) the filling level and/or in the region of the feeder line (2; 36) the ratio of inert gas to oxygen is determined and a respective other feed container (8; 7) is charged in response to at least one of the values so determined.

4. Method according to any of the preceding claims, characterised in that between the feed container (7; 8) and the transmitting vessel (33) the locking element (32), which is preferably in the form of a leaf valve, is actuated in response to a detected event, and that this event is at least one of the following:
a) the locking element is actuated in response to a preset period of action of the inert gas in the feed container (7; 8) and feeder line (2; 36);
b) the locking element is actuated in response to the filling level in the feed container (7; 8) being reached and detected by at least one filling level sensor (9);
c) in the region of the feeder line (2; 36) the ratio of inert gas to oxygen is determined and the locking element (32) actuated in response thereto.

5. Apparatus for carrying out the method according to any of the preceding claims, having at least one feed container (7; 8) supplied via a feeder line (2; 36) - and if appropriate a directional control valve (39) - and having at least one transmitting vessel (33) connected to said feed container via a locking element (32) - preferably in the form of a leaf valve - said transmitting vessel opening in the shape of a hopper into a conveyor line (34), and pneumatic lines (30; 28; 12; 20) supplied from a common inert gas source (29) opening out both into the transmitting vessel (33) and into the conveyor line (34) and the feed container (7; 8), and there being provided a control device for intermittently applying the inert gas to the transmitting vessel (33) and the conveyor line (34) at least one inert sas conveyor line (28) opening into the lower region of the feed container (7; 8),
characterised in that the inert gas in the feed container (7; 8) and also in the feeder line (36) which opens into the feed container (7; 8) flows through the loose material in the direction opposite the transport direction, whereas in the feeder line (34) it acts as the transporting agent.

6. Apparatus according to claim, 5, characterised in that the control device incorporates at least one filling level sensor (35) for detecting when the transmitting vessel (33) is full of loose material.

7. Apparatus according to claim 5 or 6, characterised in that the lower region of the feed container (7; 8) is hopper-shaped and double-walled, the inert gas conveyor line (28) opening out into the cavity between the two walls and the inner wall (27) having openings for the passage of the inert gas.

8. Apparatus according to any of claims 5 to 7, characterised in that for regulating the charge to the feed container (7; 8) there is provided a directional control valve (39) which allows through inert gas when in the position closed to the direction in which the loose material is conveyed.

9. Apparatus according to any of claims 5 to 8, characterised in that a directional control valve ( 39) is provided and that the directional control valve (39) and/or the locking element (32) is adjustable in response to a respective filling level sensor (9) and empty level sensor (10) provided on the feed container (7; 8) and/or on the reading of an inert gas/oxygen meter (40) - preferably provided between the directional control valve (39) and the feed container (7; 8).

10. Apparatus according to any of claims 5 to 9, characterised in that the dimensions of the particular feed container satisfy at least one of the following conditions:
a) the diameter of the feed container (7; 8) is not more than 1000 mm and is preferably between 400 and 500 mm;
b) the height of the feed container (7; 8) is at least 1 m, more particularly 2 to 2,5 m.

## Revendications

1. Procédé de transport de produit en vrac pulvérulent ou granuleux sensible à l'oxygène, en particulier sous forme de portions, selon lequel le produit en vrac est amené par une conduite d'alimentation (2; 36) dans un réservoir de chargement (7; 8) et est transporté de celui-ci dans une conduite de transport (34) par l'intermédiaire d'un récipient d'envoi (33) et, éventuellement, un sas (32), le transport du produit en vrac du récipient d'envoi (33) dans la conduite d'alimentation (34) étant assuré par surpression au moyen d'un gaz inerte, caractérisé en ce que le gaz inerte imbibe le produit en vrac contre le sens de transport dans le réservoir de chargement (7; 8) ainsi que la conduite d'alimentation (36) débouchant dans le réservoir de chargement (7: 8) et sert par contre d'agent de transport dans la conduite de transport (34).

2. Procédé selon la revendication 1, caractérisé en ce que la pression dans le récipient d'envoi (33) et la conduite de transport (34) est commandée par au moins un détecteur de niveau (35) en fonction de l'obtention d'un récipient d'envoi (33) à l'état plein.

3. Procédé selon la revendication 1 ou 2 caractérisé en ce que le produit en vrac est amené à partir d'au moins deux réservoirs de chargement (7; 8) raccordés en parallèle et des récipients d'envoi (33) en alternance de manière quasi-continue dans une conduite de transport commune (34);
et en ce que, de préférence dans un réservoir de chargement (7; 8), le niveau et/ou, dans la région de la conduite d'alimentation, (2; 36) le rapport entre le gaz inerte et l'oxygène sont déterminés et un réservoir de chargement (8; 7) respectivement différent est chargé en fonction d'au moins une des valeurs ainsi déterminées.

4. Procédé selon une des revendications précédentes caractérisé en ce qu'entre le réservoir de chargement (7; 8) et le récipient d'envoi (33), le sas (32) conçu de préférence comme un clapet est actionné en fonction d'un événement établi et que cet événement est au moins un des suivants:
a) l'actionnement du sas est assuré en fonction d'un temps d'action prédéterminé du gaz inerte dans le réservoir de chargement (7; 8) et la conduite d'alimentation (2; 36);
b) l'actionnement du sas est assuré en fonction de l'obtention d'un niveau plein du réservoir de chargement (7; 8) déterminé par au moins un détecteur de niveau (9);
c) dans la région de la conduite d'alimentation (2; 36); le rapport entre le gaz inerte et l'oxygène est déterminé et le sas (32) est actionné en fonction de celui-ci.

5. Dispositif d'exécution du procédé selon une des revendications précédentes avec au moins un réservoir de chargement (7; 8) alimenté par une conduite d'alimentation (2; 36) - et éventuellement un distributeur (39) - et au moins un récipient d'envoi (33) relié à celui-ci par un sas (32) - de préférence conçu comme un clapet, ce récipient d'envoi débouchant en forme d'entonnoir dans une conduite de transport (34), des conduites pneumatiques (30; 28; 12; 20) alimentées a partir d'une source de gaz inerte commune (29) débouchant aussi bien dans le récipient d'envoi (33) que dans la conduite de transport (34) et le réservoir de chargement (7; 8) et un dispositif de commande étant prévu pour l'alimentation intermittente du récipient d'envoi (33) ou de la conduite de transport (34) avec le gaz inerte, au moins une conduite de transport du gaz inerte (28) débouchant dans la zone inférieure du réservoir de chargement (7; 8), caractérisé en ce que le dispositif est configuré de sorte que le gaz inerte imbibe le produit en vrac contre le sens du transport dans le réservoir de chargement (7;8) et la conduite d'alimentation (36) débouchant dans le réservoir de chargement (7; 8) et sert par contre d'agent de transport dans la conduite de transport (34).

6. Dispositif selon la revendication 4 caractérisé en ce que le dispositif de commande présente au moins un détecteur de niveau (35) pour la détermination du niveau du produit en vrac dans le récipient d'envoi (33).

7. Dispositif selon la revendication 5 ou 6 caractérisé en ce que la zone inférieure du réservoir de chargement (7; 8) est conçue en forme d'entonnoir ou à double paroi, la conduite de transport du gaz inerte (28) débouchant dans la cavité entre les deux parois et la paroi interne (27) possède des orifices pour la pénétration du gaz inerte.

8. Dispositif selon une des revendications 5 à 7 caractérisé en ce qu'un distributeur (39) qui, en position de blocage, est perméable au gaz inerte contre le sens de transport du produit en vrac est prévu pour le réglage du chargement de réservoir de chargement (7; 8).

9. Dispositif selon une des revendications 5 à 8 caractérisé en ce qu'un distributeur (39) est prévu et en ce que le distributeur (39) et/ou le sas (32) est réglable, en fonction d'un indicateur de niveau plein (9) ou d'un indicateur de niveau vide (10) prévu sur le réservoir de chargement (7; 8) et/ou de la valeur de mesure d'un appareil de mesure gaz inerte-oxygène (40) prévu entre le distributeur (39) et le réservoir de chargement (7; 8).

10. Dispositif selon une des revendications 5 à 9 caractérisé en ce que les dimensions des réservoirs de chargement respectifs remplissent au moins une des conditions suivantes:
a) le diamètre du réservoir de chargement (7; 8) n'est pas supérieur à 1.000 mm et se situe de préférence entre 400 et 500 mm:
b) la hauteur du réservoir de chargement (7; 8) s'élève à au moins 1 m, en particulier 2 m à 2,5 m.
